# EUROPÄISCHE PATENTSCHRIFT

(11) **EP 0 587 640 B1**
(45) Veröffentlichungstag und Bekanntmachung des Hinweises auf die Patenterteilung: **27.03.1996**
(21) Anmeldenummer: 92911111.0
(22) Anmeldetag: 12.06.1992
(51) Int. Cl.: F16D 69/02

(54) **REIBBELAG SOWIE VERFAHREN ZUR HERSTELLUNG EINES REIBBELAGES**
FRICTION LINING AND METHOD OF MANUFACTURING IT
GARNITURE DE FRICTION ET SON PROCEDE DE FABRICATION

(30) Priorität: 13.06.1991 DE 4119515
(43) Veröffentlichungstag der Anmeldung: 23.03.1994
(73) Patentinhaber: TEXTAR GmbH, D-51375 Leverkusen (DE)
(72) Erfinder: SOENNECKEN, Hartmut, D-5067 Kürten-Busch (DE); SAVARY, Wolf, D-5060 Bergisch Gladbach 2 (DE)
(74) Vertreter: Dallmeyer, Georg
(86) Internationale Anmeldenummer: EP9201254
(87) Internationale Veröffentlichungsnummer: WO9222756

(56) Entgegenhaltungen:
- EP-A- 0 000 839
- EP-A- 0 000 840
- EP-A- 0 050 377
- EP-A- 0 271 965
- DE-A- 2 733 244
- FR-A- 2 550 838
- GB-A- 2 155 809

## Beschreibung

Die Erfindung betrifft einen Reibbelag, insbesondere für Bremseinrichtungen nach dem Oberbegriff des Anspruchs 1 sowie ein Verfahren zur Herstellung eines Reibbelages nach dem Oberbegriff des Anspruchs 8.

Aus der DE 21 33 455 A1 sowie aus der DE 23 62 190 A1 sind Reibbeläge bekannt, die auf der freien Oberfläche des Reibbelages mit einer Schleifschicht versehen sind, die dazu dient, Oberflächenveränderungen, insbesondere Riefenbildungen auf dem Gegenstück zu dem Reibbelag durch Schleifen zu vergleichmäßigen.

Diese Riefenbildung soll durch mangelhafte Spanabführmöglichkeiten bei flächigem Kontakt der Reibpartner hervorgerufen werden.

Bekannte Schleifschichten bestehen aus Schleifpartikeln, z.B. Carborundum, Al₂O₃, Bimssteinpulver u.dgl., die mit einem oder mehreren Bindern, z.B. modifizierten Phenolharzen oder deren Abkömmlingen wie Kresolharz u.dgl. gebunden sind.

Die Bindemittel auf Natur- oder Kunstharzbasis sind warm aushärtend und weisen eine Temperaturbeständigkeit auf, die dem des Reibmaterials entspricht.

Aus der DE-A-23 62 190 ist es bekannt, die Schleifschicht auf der Oberfläche des Reibbelages wellenförmig zu gestalten, um in jedem Betriebszustand der Bremse eine zuverlässige Spanabfuhr zu gewährleisten. Die Schichtstärke der Schleifschicht beträgt dabei ca. 0,3 bis 0,6 mm.

Die bekannten Schleifschichten wurden bisher in Verbindung mit asbesthaltigen Bremsbelägen verwendet.

Infolge der gesetzlich geregelten Einführung von asbestfreien Bremsbelägen ergeben sich in der Praxis während des Betriebs derart ausgestatteter Bremsen neue Probleme.

Untersuchungen an solchen Bremssystemen haben gezeigt, daß das Verschleißverhalten bei niedriger Temperatur wesentlich ungünstiger ausfällt als bei Bremsen mit asbesthaltigen Belägen, d.h. der Verschleiß der Bremsscheibe fällt bei niedrigen Betriebstemperaturen der Bremse höher aus. Dies wirkt sich insbesondere nachteilig bei Fahrzeugen im Kurzstreckenbetrieb aus, bei denen die Bremsanlagen keine erhöhten Betriebstemperaturen erreichen, aber auch bei Fahrzeugen auf Langstrecken, bei denen die Bremsanlage zwischen zwei Bremsvorgängen wieder vollständig auskühlen kann.

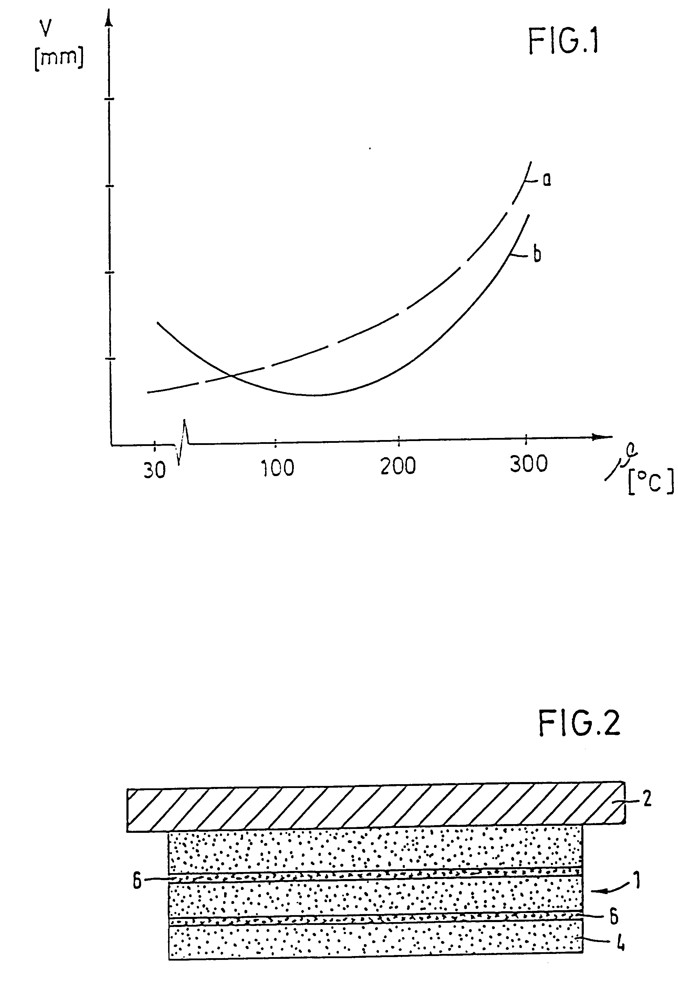

Fig.1 zeigt das quantitative Verschleißverhalten V der Bremsscheibe in Abhängigkeit von der Temperatur für asbesthaltige (a) und asbestfreie (b) Bremsbeläge im Vergleich. Das unterschiedliche Verschleißverhalten ist dabei in der Hauptsache von der Betriebstemperatur der Bremsanlage abhängig.

Diese fördert die Entstehung von ungleichmäßigem Verschleiß, nämlich Dickendifferenzen, an der Bremsscheibe. Diese Dickendifferenzen führen zu dem sogenannten Bremsenrubbeln, d. h. zu starken Bremskraftschwankungen während des Bremsvorganges. Dieses führt zu niedrigfrequenten Schwingungen, die sich auf Bauteile des gesamten Fahrzeuges übertragen können und damit die Fahrsicherheit und die Lebensdauer der Bremsanlage beeinträchtigen.

Nach derzeitigen Erkenntnissen entstehen diese Dickendifferenzen durch periodische Berührungen des Belages mit der rotierenden Scheibe im ungebremsten Zustand. Diese können z. B. hervorgerufen werden durch maßliche Toleranzen der Bremsanlage, Rückzugsmomente der Radbremszylinder oder von Achsbauteilen.

Aus der DE 28 21 323 A1 ist eine Reibbacke für eine Bremse bekannt, bei der eine in den Reibbelag eingebettete Zwischenschicht vorhanden ist, die als Wärmebarriere dient.

Der Erfindung liegt die Aufgabe zugrunde, einen Reibbelag mit Schleifelementen zu schaffen, der auch während der fortschreitenden Abnutzung des Reibbelages zwischenzeitlich eine Regeneration des reibungstechnischen Gegenstücks zum Reibbelag ermöglicht.

Zur Lösung dieser Aufgabe dienen die Merkmale des Anspruchs 1 sowie des Anspruchs 8.

Schleifelemente schichtförmig anzuordnen, hat den Vorteil, daß der Reibbelag mit seiner gesamten Fläche als Reibelement wirken kann und daß das Schleifelement erst nach bestimmten Abnutzungszuständen des Reibbelages zum Einsatz kommt, so daß eine Regeneration des reibungstechnischen Gegenstücks zum Reibbelag regelmäßig nach vorbestimmten Standzeiten erfolgt.

Bei einer solchen Gestaltung des Reibbelages ist allerdings zur Vermeidung von Reibwertunterschieden eine Abstimmung des Reibwertes des Schleifelementes auf den Reibwert des Reibelementes erforderlich.

Eine weitere Ausgestaltung der Erfindung besteht aus einem zusätzlichen Scheifelement, das sich quer zu der Bewegungsrichtung des reibungstechnischen Gegenstücks zu dem Reibelement in einen Teilbereich des Reibelementes über die gesamte Breite des Reibelementes und von der Oberfläche des Reibelementes ausgehend in die Tiefe erstreckt.

Dadurch, daß das Schleifelement sich quer zu der Bewegungsrichtung des reibungstechnischen Gegenstücks zu dem Reibelement in einem Teilbereich des Reibelementes über die gesamte Breite des Reibelementes und von der Oberfläche des Reibelementes ausgehend in die Tiefe erstreckt, ist ein kontinuierliches Schleifen des Reibungspartners, z.B. einer Bremsscheibe, möglich, so daß die Bildung von Unebenheiten auf Grund des flächigen Kontaktes der Reibungspartner vermieden wird. Eine derartige vorzugsweise streifenförmige Anordnung des Schleifelementes innerhalb des Reibelementes hat auch den Vorteil, den Reibwert der Reibbeläge gleichmäßig zu beeinflussen, so daß das Schleifelement nicht zwangsläufig den gleichen Reibwert aufweisen muß wie das Reibelement.

Eine weitere erfindungsgemäße Lösung besteht darin, daß das Schleifelement mit einem Volumen-Gewichtsanteil von ca. 1 bis 30 %, vorzugsweise 5 bis 20 % faserverstärkt ist.

Als Faserverstärkung können alle natürlichen Mineral-, künstlichen Mineral- und/oder organischen Fasern, wie z. B. Basalt-, Aramid-, Kohle-, Glas- oder Keramikfasern, verwendet werden.

Bei einem Ausführungsbeispiel enthält das faserverstärkte Schleifelement eine Mischung aus Aramid-, Glasund/oder Kohlefasern, wobei über das Mischungsverhältnis der Fasern eine Anpassung an den Reibwert des Reibelementes erfolgt. Dabei macht man sich die Wirkung der Fasern zunutze, wobei beispielsweise Aramidfasern eine weiche Schleifwirkung und Glasfasern eine harte Schleifwirkung erzeugen.

Gemäß dem erfindungsgemäßen Verfahren ist vorgesehen, schichtförmige Schleifelemente separat herzustellen, z.B. durch Extrudieren, Pressen oder Ausstanzen und diese schichtförmigen Schleifelemente anschließend gemeinsam entweder mit bereits vorgepreßten Reibelementschichten oder mit pulverförmigem Reibmaterial zu verpressen.

Im folgenden werden unter Bezugnahme auf die Zeichnungen Ausführungsbeispiele der Erfindung näher erläutert.

Es zeigen
- Fig. 1: einen Vergleich des Verschleißverhaltens von Bremsscheiben in Abhängigkeit von der Temperatur der Bremsscheibe;
- Fig. 2: ein erstes Ausführungsbeispiel eines Reibbelages mit integrierten Schleifelementschichten;
- Fig. 3: eine Bremsbacke mit einer Kombination unterschiedlicher Schleifelemente.

Fig. 2 zeigt schichtförmige, in einem Reibbelag 1 aus mehreren Reibelementschichten integrierte Schleifelementschichten 6.

Die verschiedenen Schichten können dabei in einfacher Weise hergestellt werden. Es gibt die Möglichkeit, diese in Form einer Folie in die Preßform einzulegen oder die Schicht in bekannten Schüttpreßverfahren herzustellen. Die Folie hat gegenüber dem Schüttpressen den Vorteil, daß die Schichtstärke genau definiert in immer der gleichen Dicke im Reibbelag angeordnet werden kann. Die Folie muß allerdings entsprechend der verwendeten Belaggeometrie zugeschnitten sein. Der Vorteil einer solchen Bremsbacke besteht darin, daß das reibungstechnische Gegenstück, hier eine Bremsscheibe, nach genau definierten Abnutzungszuständen, nämlich nach dem Verschleiß einer bestimmten Reibschicht 4 durch die Schleifschicht 6 regelmäßig regeneriert wird.

Wesentlich ist bei diesem Ausführungsbeispiel, daß eine exakte Abstimmung des Reibwertes der Schleifelementschicht auf den Reibwert der Reibelementschicht erfolgt, damit bei unterschiedlichen Abnutzungszuständen der jeweiligen Bremsbacken keine Reibwertunterschiede entstehen.

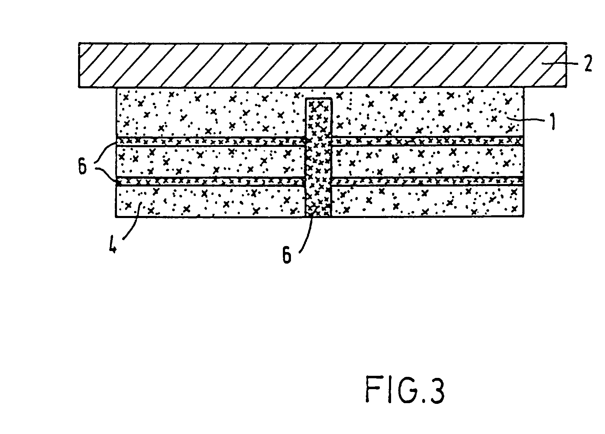

Fig. 3 zeigt ein weiteres Ausführungssbeispiel, bei dem ein zusätzliches Schleifelement 6 sich von der Oberfläche des Reibbelages 1 axial in die Tiefe und radial über die gesamte Breite des Reibbelages 1 erstreckt, und zwar orthogonal zur Bewegungsrichtung der Gegenreibfläche, hier der Bremsscheibe. Das Schleifelement reicht bis kurz vor die Belagträgerplatte 2, berührt diese jedoch nicht. Bei einem solchen Reibbelag ist ein kontinuierlicher Schleifprozeß gewährleistet.

Das Schleifschichtmaterial kann zusätzlich als Granulat aufbereitet sein und in definierter Menge mit dem Reibbelagmaterial vermischt und gemeinsam als einheitliche Masse verpreßt werden. Ein solcher Reibbelag hat den Vorteil, daß die Schleifwirkung kontinuierlich über die gesamte Lebensdauer des Bremsbelages wirkt und somit die Gegenreibfläche, hier die Bremsscheibe, in einem optimalen Zustand erhält. Über die Rezeptur läßt sich leicht die Schleifwirkung einstellen, d.h. man kann für die verschiedenen Anforderungen an die Bremsanlage und an den entsprechenden Bremsbelag individuelle ideale Reibbedingungen schaffen.

Eine Verstärkung des Schleifmaterials mit Aramidfasern erzeugt dabei eine eher weiche Schleifwirkung und eine Verstärkung mit Glasfasern den gegenteiligen Effekt.

Die Mischung verschiedener Fasern, z.B. Aramidfasern, Glasfasern und Kohlefasern und deren Anteilsverhältnis untereinander ermöglicht es dabei, unterschiedliche Schleifwirkungen vorzubestimmen und sich optimal an den Reibwert des Reibbelages anzupassen.

Figur 3 zeigt das Ausführungsbeispiel, bei dem das Schleifelement 6 teils als Zwischenschicht zwischen aufeinanderfolgenden Reibelementschichten angeordnet ist, teils sich von der Oberfläche des Reibelementes ausgehend in einem Streifen über die gesamte Breite orthogonal zur Bewegungsrichtung des reibungstechnischen Gegenstücks zu dem Reibelement, z. B. eine Bremsscheibe, in die Tiefe des Reibelementes erstreckt, und teils durch Beimischung zum Reibbelagmaterial gemeinsam mit diesem zu einer Reib-/Schleifschicht verpreßt ist.

Das Schleifelement in Form einer Zwischenschicht kann auch allein mit der Beimischung zum Reibbelagmaterial kombiniert sein.

## Patentansprüche

1. Reibbelag, insbesondere für Bremseinrichtungen, mit einem schichtförmigen Reibelement aus einem asbestfreien Reibbelagmaterial und einem schichtförmigen Schleifelement aus Schleifmaterial mit einem warmaushärtenden Bindemittel auf Natur- oder Kunstharzbasis,
**dadurch gekennzeichnet**,
daß das Schleifelement (6) als Zwischenschicht zwischen aufeinander folgenden Reibelementschichten (4) angeordnet ist.

2. Reibbelag, nach Anspruch 1, dadurch gekennzeichnet, daß ein zusätzliches Schleifelement (6) sich von der Oberfläche des Reibelementes (1) ausgehend in einem Streifen über die gesamte Breite orthogonal zur Bewegungsrichtung des reibungstechnischen Gegenstücks zu dem Reibelement (1) in die Tiefe des Reibelementes (1) erstreckt.

3. Reibbelag nach einem der Ansprüche 1 oder 2, dadurch gekennzeichnet, daß das Schleifelement (6) mit einem Volumen-/Gewichtsanteil von ca.l bis 30 %, vorzugsweise 5 bis 20 % faserverstärkt ist.

4. Reibbelag nach Anspruch 3, dadurch gekennzeichnet, daß das faserverstärkte Schleifelement (6) Aramidfasern enthält.

5. Reibbelag nach Anspruch 3, dadurch gekennzeichnet, daß das faserverstärkte Schleifelement (6) Glasoder Keramikfasern enthält.

6. Reibbelag nach Anspruch 3, dadurch gekennzeichnet, daß das faserverstärkte Schleifelement (6) Kohlefasern enthält.

7. Reibbelag nach einem der Ansprüche 3 bis 6, dadurch gekennzeichnet, daß das faserverstärkte Schleifelement (6) eine Mischung aus Aramid-, Basalt-, natürlichen Mineral-, künstlichen Mineral-, Glas-, Keramik- und/oder Kohlefasern enthält und daß über das Mischungsverhältnis der Fasern eine Anpassung an den Reibwert des Reibelementes (4) erfolgt.

8. Verfahren zur Herstellung von Reibbelägen, insbesondere für Bremseinrichtungen, durch Verpressen eines asbestfreien Reibbelagmaterials zu einer Reibschicht,
**gekennzeichnet durch**
die separate Herstellung von schichtförmigen Schleifelementen durch Extrudieren, Pressen oder Ausstanzen und durch anschließendes gemeinsames Verpressen des Schleifelementes als Zwischenschicht mit mehreren Reibelementschichten.

## Claims

1. A friction lining, particularly for braking means, comprising a layer-shaped friction element made of an asbestos-free friction lining material and a layer-shaped abrasive element made of abrasive material comprising a thermosetting binder on the basis of natural or synthetic resin,
**characterized in**
that the abrasive element (6) is arranged as an intermediate layer between successive friction element layers (4).

2. The friction lining according to claim 1, characterized in that an additional abrasive element (6), in the form of a strip, extends from the surface of the friction element (1) over the entire width, orthogonally to the direction of movement of the friction-technical counterpart of the friction element (1), into the depth of the friction element (1).

3. The friction lining according to one of claims 1 or 2, characterized in that the abrasive element (6) is fiber-reinforced by a percentage of volume/weight of from about 1 to 30%, preferably from 5 to 20%.

4. The friction lining according to claim 3, characterized in that the fiber-reinforced abrasive element (6) contains aramide fibers.

5. The friction lining according to claim 3, characterized in that the fiber-reinforced abrasive element (6) contains glass or ceramic fibers.

6. The friction lining according to claim 3, characterized in that the fiber-reinforced abrasive element (6) contains carbon fibers.

7. The friction lining according to one of claims 3 to 6, characterized in that the fiber-reinforced abrasive element (6) contains a mixture of aramide fibers, basalt fibers, natural mineral fibers, synthetic mineral fibers, glass fibers, ceramic fibers and/or carbon fibers and in that an adaptation to the coefficient of friction of the friction element (4) is effected via the mixing ratio of the fibers.

8. A method for manufacturing friction linings, particularly for braking means, by pressing an asbestos-free friction lining material to form a friction layer,
**characterized by**
the separate manufacture of layer-shaped abrasive elements by extruding, pressing or punching and by the subsequent common pressing of the abrasive element as intermediate layer with a plurality of friction element layers.

## Revendications

1. Garniture de friction, en particulier pour dispositifs de freinage, comportant un élément de friction sous forme de couche en un matériau de garniture de friction dépourvu d'amiante et un élément abrasif sous forme de couche en un matériau abrasif comportant un liant thermodurcissable à base de résine naturelle ou synthétique,
caractérisée par le fait que l'élément abrasif (6) est disposé comme couche intermédiaire entre des couches d'élément de friction (4) successives.

2. Garniture de friction selon la revendication 1, caractérisée par fait qu'un élément abrasif (6) supplémentaire s'étend de la surface de l'élément de friction (1) au fond de l'élément de friction (1) selon une bande sur toute la largeur, orthogonalement à la direction de mouvement de la pièce technique de friction opposée à l'élément de friction (1).

3. Garniture de friction selon l'une des revendications 1 ou 2, caractérisée par le fait que l'élément abrasif (6) est renforcé par des fibres selon une proportion en volume-/poids d'environ 1 à 30 %, de préférence 5 à 20 %.

4. Garniture de friction selon la revendication 3, caractérisée par le fait que l'élément abrasif (6) renforcé par des fibres contient des fibres d'aramide.

5. Garniture de friction selon la revendication 3, caractérisée par le fait que l'élément abrasif (6) renforcé par des fibres contient des fibres de verre ou céramiques.

6. Garniture de friction selon la revendication 3, caractérisée par le fait que l'élément abrasif (6) renforcé par des fibres contient des fibres de carbone.

7. Garniture de friction selon l'une des revendications 3 à 6, caractérisée le fait que l'élément abrasif (6) renforcé par des fibres contient un mélange de fibres d'aramide, de fibres minérales naturelles, de fibres minérales synthétiques, de fibres de verre, de fibres céramiques et/ou de carbone et que par la proportion du mélange de fibres une adaptation au coefficient de l'élément de friction (4) est réalisée.

8. Procédé de fabrication de garnitures de friction, en particulier pour dispositifs de freinage, par compactage d'un matériau de garniture de friction dépourvu d'amiante en une couche de friction,
caractérisé par la fabrication séparée d'éléments abrasifs en forme de couches par extrusion, pressage ou estampage et par un compactage ultérieur commun de l'élément abrasif comme couche intermédiaire avec plusieurs couches d'élément de friction.
